(19) Europäisches Patentamt European Patent Office Office européen des brevets

(11) **EP 4 622 285 A1**

(12) **EUROPEAN PATENT APPLICATION**

(43) Date of publication:
24.09.2025   Bulletin 2025/39

(21) Application number: 24164132.3

(22) Date of filing: 18.03.2024

(51) International Patent Classification (IPC):
H04N 23/88 (2023.01)      H04N 23/45 (2023.01)
H04N 23/667 (2023.01)     H04N 23/90 (2023.01)

(52) Cooperative Patent Classification (CPC):
H04N 23/88; H04N 23/45; H04N 23/90

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Beijing Xiaomi Mobile Software Co.,
Ltd.
Beijing 100085 (CN)

(72) Inventors:
• TUNA, Uygar
Beijing, 100085 (CN)

• UTRIAINEN, Sampo
Beijing, 100085 (CN)
• TUPPURAINEN, Miikka
Beijing, 100085 (CN)
• RYTKÖNEN, Teemu
Beijing, 100085 (CN)
• LAMPINEN, Lasse
Beijing, 100085 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **METHOD FOR SYNCHRONIZATION OF A MULTI CAMERA DEVICE**

(57)    Method for synchronization of a multi-camera device having a first camera providing first image data and a second camera providing second image data, including: Determine achromaticity of the first image data and the second image data; Calculate RGB-means for the first image data and the second image data as weighted average of the RGB-values of the first image data and second image data on the basis of achromaticity; Adapting a white balance, WB, gain of the second camera according to the difference between the RGB-means of the first image data and the RGB-means of the second image data.

Fig. 2

EP 4 622 285 A1

**Description**

The present invention relates to a method for synchronization of a multi camera device and such a device.

Today's mobile camera devices are equipped with multiple imaging sensors or camera modules having different properties and different characteristics. While this provides additional information for the scene, it also poses challenges when a seamless/smooth transition from one camera to the other camera is desired, i. e. during a video capture, image preview on a display or any other type of sequence of frames irrespective of whether stored/captured and/or displayed.

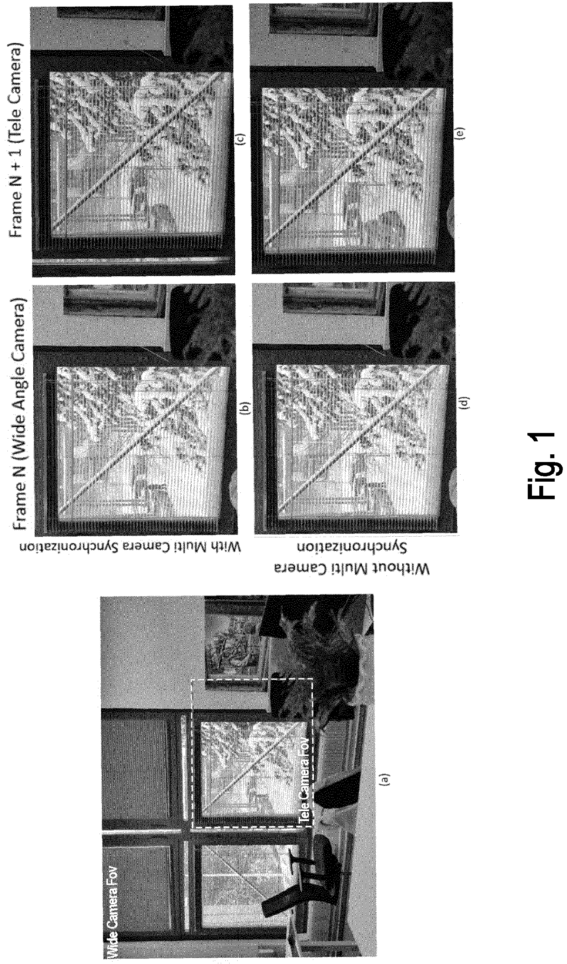

Different scenarios exist where a transition between multiple cameras can occur. In Figure 1 an example from the prior art is shown. An use case of zoom in and zoom out is shown, where the camera switches between cameras dedicated for near and far such as ultra-wide, wide and telecameras. In Figure 1(a) the user may zoom in and thereby switches from a wide angle camera to the telecamera, wherein the field of view (FOV) of the wide camera is depicted in Figure 1(a) and the dashed rectangle is indicating the field of view of the telecamera. If the camera switch happens between frame N (wide angle camera image) and frame N+1 (telecamera image), color inconsistencies occur as exemplified in the comparison between Figure 1(d) (showing the cut-out corresponding to the FOV of the telecamera from the wide camera image or frame N in Figure 1(a)), wherein Figure 1(e) shows the frame N+1 of the telecamera image. Color mismatch is clearly visible from the comparison between Figures 1(d) and 1(e). This color mismatch would also be present in a video stream captured during switch of the cameras and provides insufficient results.

It is an object of the present invention to provide a method for enabling a smooth switching between at least two cameras.

The problem is solved by a method according to claims 1, a device according to claim 13 and a computer storage device according to claim 15.

In an aspect of the present invention a method for a synchronization of a multi camera device is provided. Therein, the multi camera device has at least a first camera providing first image data, and a second camera providing second image data. However, the present invention is not limited to exactly a first camera and a second camera and the multi-camera device may have more than two cameras. Therein, the cameras may have different properties and different characteristics or may be arranged at different positions at the multi-camera device having only partially overlapping or non-overlapping FOVs. Therein, the first image data and/or the second image data may be raw data provided by a camera sensor or may be processed or partially processed raw data, for example processed in an image signal processing (ISP) pipeline. A method for synchronization multi camera device according to the present invention includes:

> Determine achromaticity of the first image data and the second image data;
> Calculate RGB-means for the first image data and the second image data as weighted average of the RGB-values of the first image data and second image data on the basis of achromaticity;
> Adapting a white balance, WB, gain of the second camera according to the difference between the RGB-means of the first image data and the RGB-means of the second image data.

Consequently, the white balance gain, applied to the second camera and used for adapting the second image data, is adapted according to the difference of the RGB-means of the first image data and the second image data on the basis of the achromaticity of the first image data and the second image data. Hence, white balance can be matched and synchronized between the first camera and the second camera in particular for the achromatic regions of the second image data. The present invention does not make use of any pre-calculated inter-camera color calibration matrices. Instead, the WB gain for the second camera is dynamically adapted on the basis of the first image data and second image data. Hence, the present invention is applicable and provides satisfying results for illuminations even outside the range for which any precalculated inter-camera color calibration matrixes would be calculated.

Preferably, achromaticity comprises or is the probability of being achromatic, i.e. achromaticity probability, indicating for each pixel whether it belongs to an achromatic object in the scene or not

Preferably, the achromaticity is determined from an auto white balance (AWB) statistics of the first image data and/or the second image data. Therein, the AWB statistics may be determined from an image signal processor (ISP) of an ISP pipeline and thus, determining the AWB statistics can be implemented in hardware and can be provided with no or minimal delay and in particular in real-time. Therein, in particular the AWB statistics may be a low resolution representation of the first image data or the second image data, respectively. Therein, low resolution representation relates to a representation of the first image data or the second image data having a resolution lower than the first image data and the second image data. In particular, the AWB statistics may be a low resolution representation having a pixel size of below 384x512, preferably below 192x256 and more preferable below 64x84. Therein, the amount of data processed when determining the achromaticity is reduced. Consequently, the achromaticity can be determined fast and in particular in real-time during a video stream. As a consequence, even under changing illumination conditions, switching to the inactive camera (which then becomes the active camera) can be handled and seamless/smooth transition to the inactive camera can be performed while still providing satisfying results.

Preferably, AWB information for the first camera and/or the second camera are determined and the AWB statistics of the first image data and/or the second image data, respectively, is corrected on the basis of the AWB information. In particular, from the AWB information also the WB gain applied to the first camera and/or the second camera is determined in order to produce the first image data or the second image data. However, in the present invention the AWB information is also used to correct the AWB statistics of the first image and/or the AWB statistics of the second image data. Thus, by correcting the AWB statistics of the first image data and/or the second image data on the basis of the AWB information transforms the AWB statistics of the first image data and/or the second image data from a color space specific for the first camera or the second camera, respectively, to a device independent color space.

Preferably, the AWB statistics of the first image data and/or the AWB statistics of the second image data is color corrected before determining achromaticity of the first image data and the second image data. Hence, any influence on the color in the AWB statistics of the first image data and/or the second image data can be corrected before determining the achromaticity. Consequently, the achromaticity is determined from the color corrected AWB statistics of the first image data and/or the color corrected AWB statistics of the second image data. Therein, color correction may be applied only to the AWB statistics of the first image data or may be applied only to the AWB statistics of the second image data. In particular, color correction is applied to the AWB statistics of the first image data and the AWB statistics of the second image data. Consequently, by applying the color correction to the AWB statistics of the first image data and/or the second image data, the first image data and the second image data can transform from a camera specific color space to a device independent color space independent from any characteristics or tuning of the first camera and the second camera. Therein, color correction of the AWB statistics of the first image data and/or the AWB statistics of the second image data may be provided by pre-calculated individual color correction matrices (CCM) which may be specific for the first camera and the second camera, respectively.

Preferably, determining achromaticity includes: Determining the probability for each pixel of the first image data and/or the second image data to belong to an achromatic object in the first image data or the second image data, respectively. In particular, as described before, achromaticity is determined from the AWB statistics determined from the first image data and/or the AWB statistics determined from the second image data. Consequently, the probability of a pixel to be achromatic, i.e. its achromaticity probability, indicative of each pixel whether it belongs to an achromatic object in the scene or not, is determined as achromaticity. Therein, the fact is used that an achromatic object in the scene should have equal RGB components of the pixel. In other words, cases where the object becomes chromatic, then the RGB values should start diverging from each other. However, as long as the pixel belongs to an achromatic object of the scene, white balance between the first image data and the second image data for this pixel should be similar or the same. Therein, achromaticity can be calculated for all three channels, i. e. red (R) channel, green (G) channel and blue (B) channel combinedly. However, achromaticity can also be determined only on the basis of one channel, e. g. the green channel alone, or can be determined for a combination of any two channels.

Preferably, the RGB-means for the first image data is calculated by weighted average of the RGB values of the first image data, weighted by the achromaticity of the first image data. Hence, the determined achromaticity provides the weights in order to determine the RGB-means. Additionally or alternatively, the RGB-means of the second image data is calculated by weighted average of the RGB values of the second image data, weighted by the achromaticity of the second image data. Hence, the RGB-means are indicative of the color distribution in particular of the achromatic objects in the scene which should match between the cameras. Therefore, the WB gain of the second camera can be adapted on the basis of the difference between the RGB-means of the first image data and the RGB-means of the second image data. In particular, if the first camera and the second camera are synchronized, the difference between the RGB-means of the first image data and the RGB-means of the second image data vanishes. Consequently, the WB gain of the second camera is adapted until the RGB-means of the first image and the RGB-means of the second image data matches or almost matches.

Preferably, an estimated WB gain for the second camera is determined by a predetermined or precalculated color spaced transform matrix (CTM) from the WB gain determined for the first camera, wherein the adapted WB gain of the second camera is interpolated between the estimated WB gain and the WB gain determined by the difference between the RGB-means of the first image data and the RGB-means of the second image data. In particular, the estimated WB gain is considered as fallback position, if the AWB statistics for the first image data or the second image data are invalid for example due to over-/underexposure. Consequently, the predetermined or precalculated CTM is used in order to estimate the WB gain. Therein, depending on the validity of the AWB statistics, the WB gain determined by the difference between the RGB-means of the first image data and the RGB-means of the second image data is preferred. Therein, the weight for the interpolation may be determined by the achromaticity, i. e. an average of the achromaticity determined for all pixels in the first image data and/or the second image data. Alternatively, the weight for interpolation can be determined by a threshold function.

Preferably, an individual color correction matrix (CCM) is determined for the first camera from the first image data, wherein a predetermined transformation matrix (TM) is applied to the individual CCM of the first camera to determine a transformed CCM. Therein, the individual CCM of the first camera may be calculated offline and may be calculated on the basis of the camera tuning and/or characterization of the first camera. Preferably, the TM is precalculated or offline calculated. For color correction of the second camera the transformed CCM is used. Therein, the individual CCM of the first camera may be determined according to the Correlated color temperature (CCT), WB gains, Lux level, ambient illuminant spectral power distribution (SPD) or the like. In particular, the individual CCM of the first camera is determined from a look-up table (LUT). In particular, any CCM here and below may be provided by a 3X3 matrix. By using the transformed CCM for color correction of the second camera, color correction of the chromatic objects in the scene is synchronized between the first camera and the second camera. Therein, the transformed CCM can be directly used for color correction of the second camera.

Preferably, a synchronized CCM is applied to the second camera is interpolated between a predetermined/-precalculated individual CCM of the second camera and the transformed CCM. Consequently, the predetermined individual CCM of the second camera is used as a fallback position. Therein, alternatively to using directly the transformed CCM for color correction of the second camera, synchronized CCM can be used which may also consider the individual CCM of the second camera.

Preferably, the first camera and the second camera have an at least partially overlapping field of view (FOV). However, the present invention is not limited to the case and is also applicable to a switch between a world camera and a face camera, directed in opposite directions of the device.

Preferably, for an $N^{th}$ frame, the first camera is an active camera and the second camera is an inactive camera. This means, that the $N^{th}$ frame of the first camera is captured in a video capture, used in a computational vision (CV) algorithm and/or is displayed to a user. For the $(N+1)^{th}$ frame, the first camera becomes the inactive camera and the second camera is the active camera when the adapted WB gain and /or the transformed/synchronized CCM for the second camera is applied to the $(N+1)^{th}$ frame. Thus, by applying the adapted WB gain and/or the transformed/Synchronized CCM to the $(N+1)^{th}$ frame of the second camera, synchronization between the first camera and the second camera can be achieved and seamless transition from the first camera to the second camera can be obtained.

Preferably, in addition to synchronization of the WB gains and the CCM, synchronization of the automatic exposure correction (AEC) is feasible, such as gamma correction, correction of the brightness or correction of the contrast which is usually implemented in the software or firmware of the device, i. e. transferred from the first camera to the second camera to also ensure a seamless transition from the first camera to the second camera in terms of the AEC. Similar tone-mapping can be synchronized between the first camera and the second camera such as tone-mapping parameters from the first camera can also be applied to the second camera upon switching from the first camera to the second camera as active camera, in that tone-mapping of the second image data matches with the tone-mapping of the first image data in order to ensure seamless transition and a non-noticeable difference in the appearance of the images.

In an aspect of the present invention a device is provided comprising a first camera and a second camera, a processor and a storage device, wherein the storage device stores instructions which, when executed by the processor, performs the steps of the method described before.

Preferably, the device comprises an image signal processor (ISP) which may implement the ISP pipeline. Therein, one or more of determining the AWB statistics, applying the WB gains and applying the CCMs is performed by the ISP. Therein, for each camera an individual ISP may be implemented.

In an aspect of the present invention a computer storage device is provided storing instructions when executed by a processor performs the steps of the method described before.

In the following the present invention is described in more detail with reference to the accompanying figures.

The figures show:

Figure 1 a comparison of the synchronization result according to the present invention with the prior art,

Figure 2 a schematic flow diagram to the method according to the present invention,

Figure 3 an implementation scheme for the method according to the present invention,

Figure 4 a detailed flow diagram of the method according to the present invention and

Figure 6 a device according to the present invention.

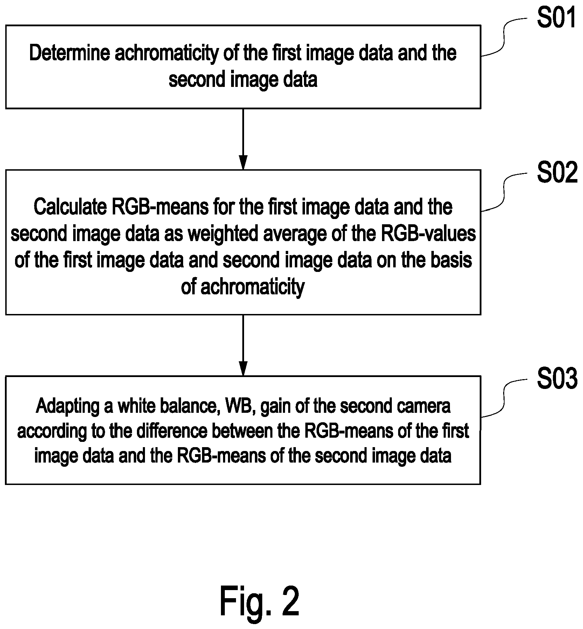

It is referred to Figure 2 showing a schematic flow diagram of the method according to the present invention. The method for synchronizing of a multi camera device having a first camera providing first image data and a second camera providing second image data comprises the following:

In step S01, achromaticity of the first image data and the second image data is determined.
In step S02, RGB-means for the first image data and the second image data are calculated as weighted average of the RGB-values of the first image data and second image data on the basis of achromaticity.

In step S03, a white balance, WB, gain of the second camera is adapted according to the difference between the RGB-means of the first image data and the RGB-means of the second image data.

A comparison of the result is shown in Figure 1. Figure 1(a) shows a field of view (FOV) of a wide camera as the active camera or first camera. Indicated with dashed lines in Figure 1(a) is the FOV of a telecamera as second camera or inactive camera. Currently, in the frame N, the image data of the first camera, i. e. the wide camera, is used and may be recorded as part of a video stream or displayed on the device. Figures 1(b) and 1(d) show an enlarged part of the wide camera corresponding to the FOV of the telecamera. In comparison, Figure 1(c) shows the second image data provided by the second camera in the $(N+1)^{th}$ frame after changing to the second camera as the active camera, corrected and synchronized with the first camera. Contrary, Figure 1(d) shows the $(N+1)^{th}$ frame after changing to the second camera as the active camera. As shown, white balance between figures 1(b) and 1(c) matches as being synchronized according to the method of the present invention. In the comparison, Figures 1(d) and 1(e) without synchronization, a white balance mismatch occurs in particular in the area of the wall between the window and the picture in the scene visible. Hence, switching from the first camera, i. e. the wide angle camera, to the second camera, i. e. the telecamera, the white balance mismatch is clearly visible either in the recorded video stream or on the display of the device. Hence, according to the method as indicated in Figure 2 and described before, a seamless transition from the first camera to the second camera as active camera can be obtained without any noticeable mismatch in the color representation of the second image data provided by the second camera.

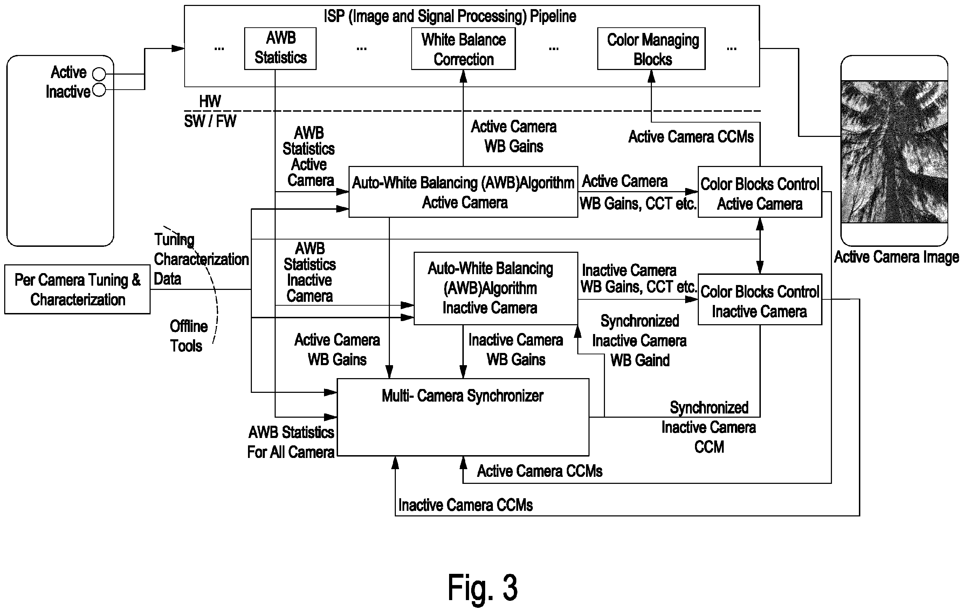

A possible implementation of the method according to the present invention into a device is shown in Figure 3. A typical imaging system consists of multiple systems, operating with each other which may be implemented as a part of hardware (HW), or run as a part of software (SW) or firmware (FW) in a CPU, GPU, dedicated digital signal processor (DSP) etc. The raw data generated by an imaging sensor is processed by an image signal processing (ISP) pipeline to generate the image for the end-user. The end user can be a human observer or a machine which then performs dedicated analysis on the produced data by the ISP pipeline. Therefore, the blocks constituting an ISP are the pixel-processing blocks and are designed to be running in the dedicated HW. These ISP blocks are designed configurable so that the adaptation to different capturing conditions are met. For instance, in low-light conditions, stronger noise-reduction is desired to remove the high noise mainly coming from the gaining operation in the sensor. The components for configuring the blocks of an ISP pipeline are usually referred as control or ISP control algorithms. In a typical imaging system, the control algorithms are usually implemented as a part of SW/FW. As one of the control algorithms, Auto-White Balancing (AWB) algorithm is designed to configure the White-Balance Correction (WBC) block in the ISP pipeline, such that the final image is adapted according to the chromaticity of the illuminant in the scene. Similarly, the required color correction has to be also adapted for the chromaticity of the dominant illumination in the scene. The blocks responsible for this configuration can be referred as Color Blocks Control (CBC).

In order to perform the per frame analysis on the scene for generating the adapted WBC block configurations (i.e. White-Balance (WB) gains), a typical AWB algorithm usually requires the following inputs as

- Tuning and configuration data of the respective camera;
- Low-resolution scaled raw data, called AWB statistics, generated by the AWB Statistics block in the ISP pipeline.

In order to configure the color managing blocks in the ISP pipeline, similar to the AWB, a typical Color Blocks Control (CBC) algorithm would require the followings as minimum (see Fig. 2)

- Tuning and configuration data, including individual Color Correction Matrices (CCMs) for each camera;
- WB-gains and Color Correlated Temperature (CCT) from the AWB algorithm.

In a device with multiple imaging sensors/cameras, there might be more than one (usually per camera) instance of the components running as SW/FW (like AWB, CBC etc.). In other words, in a device with multiple cameras, there are likely to have per camera instance for AWB and CBC algorithms. The aim of the present invention is to synchronize the color relevant HW configuration parameters, namely WB gains and CCMs, so that a seamless transition (in colors) from one camera to the other one is achieved. Multi-Camera architecture enables also synchronization of other configurations between cameras. One of the components which could be included is Auto Exposure Control (AEC) which adjusts exposure parameters of the camera. This would ensure no brightness changes are happening in camera switches.

As shown in Fig. 3, the device has two imaging sensors (i.e. cameras) of different characteristics (sensor responses). The imaging sensor whose image is displayed is called *Active Camera* and the one whose image is processes in the background and not displayed is called *Inactive Camera.* Therefore, there are two instances of AWB for inactive and active camera streams. As stated above, the raw data generated by both imaging sensor have to be processed by a set of algorithms defined in an ISP Pipeline. The ISP pipeline is also responsible for generating the AWB statistics to be used for the AWB algorithm for the given raw image from the sensor. The AWB algorithm instances running per camera, are responsible for returning the WB gains which are used in the ISP pipeline to correct the image for the illumination dominating in the scene.

Due to the various reasons, such as differences in the sensor characteristics, field-of-view (FOV), dominant illuminant in the scene, camera tunings etc., for the same scene, the WB gains calculated by these two AWB instances may be different. Furthermore, since the CCMs for the active camera are also calculated based on these WB gains, they may differ as well. These differences cause large and significant discrepancy in colors between the active and inactive cameras, which will be then visible at the instance of transition from one camera to the other. Therefore, this discrepancy should be mitigated if a smooth (seamless) transition is required when the inactive camera becomes active (and consequently, the active camera becomes inactive). Hence, a Multi-Camera Synchronizer (MCS) is implemented, running in parallel to the AWB instances, to minimize the color differences between the inactive and active camera instances.

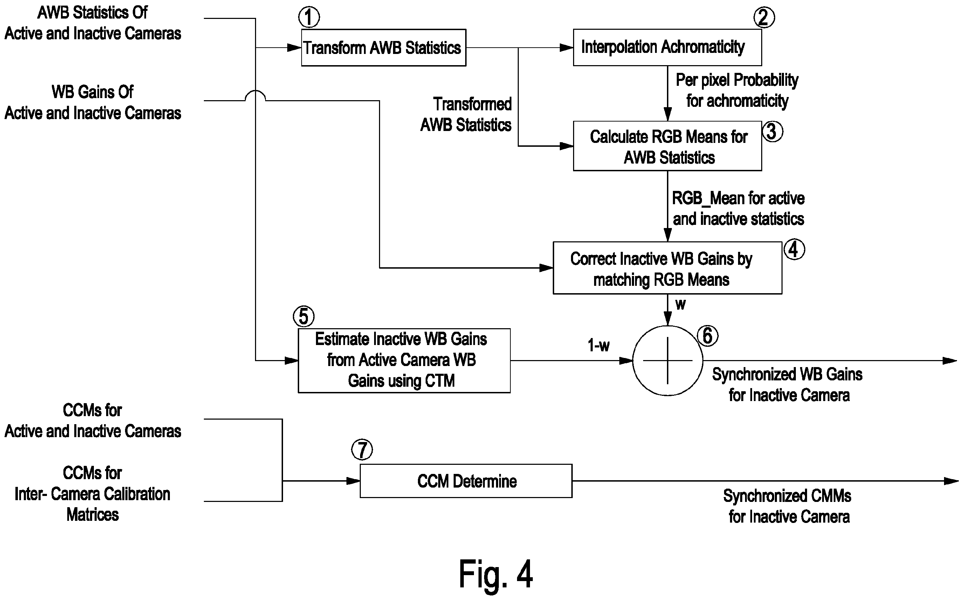

According to Figure 3, the raw image data or partially processed image data of the first camera or second camera is provided to the respective ISP pipelines. Therein, an ISP pipeline can be implemented for the first camera and one ISP pipeline can be implemented for the second camera. Therein, the ISP pipeline may be provided by an ISP processor and thus the ISP pipeline is HW implemented. From the ISP AWB statistics are provided to the AWB algorithm of the active camera and the AWB algorithm of the inactive camera. Therein, the AWB statistics provided to the AWB algorithm of the active camera is on AWB statistics of the first image wherein the AWB statistics provided to the AWB algorithm for the inactive camera is based on AWB statistics of the second image data. By the AWB algorithm, WB gains are determined, wherein the WB gain of the active camera is feedback to the ISP pipeline and used for white balance correction. The WB gain for the active camera and the WB gain of the inactive camera are provided to the multi camera synchronizer. In the multi camera synchronizer the WB gain of the inactive camera is synchronized and feedback to the AWB algorithm of the inactive camera. The WB gain of the inactive camera is also provided to the color blocks control of the inactive camera. In addition to the AWB statistics, camera tuning and characterization of the first camera and the second camera are provided to the respective AWB algorithm of the active camera and the inactive camera. In addition, the multi camera synchronizer uses the camera tuning and characterization. Camera tuning and characterization may be provided by precalculated individual color correction matrixes (CCM) for the first camera and the second camera. The transformed/synchronized CCM for the inactive camera is also provided to the color blocks control of the inactive camera. The image data of the active camera is either displayed on a display of the device or recorded as part of a video stream. Upon switching active and inactive cameras, i. e. the second camera becomes the active camera while the first camera becomes the inactive camera, the second camera is controlled by the ISP with the synchronized WB gains and the transformed/synchronized CCM. The specific steps for synchronization are shown in detail in Figure 4.

The MCS may get the followings as input:

- Per camera AWB statistics, tunings and characterization data;
- Estimated WB gains (from AWB instances);
- tunings and characterization data including individual CCMs for each camera.

The output of the MCS are then as follows:

- Synchronized inactive camera WB gains;
- Transformed/Synchronized CCM for the inactive camera.

In the following it is referred to Fig. 4:

1. *Transform AWB Statistics:* Using the estimated WB gains per camera, transform the AWB statistics of active and inactive cameras from the device specific color space to device independent color space. This could be achieved by applying WB gains to the statistics. Additionally (and optionally), a color correction matrix (CCM) could be also applied.

2. *Estimate Achromaticity:* Using the transformed statistics, for each pixel in the statistics, calculate the probability of a given pixel belonging to an achromatic object in the scene. Therein, an achromatic object in the scene should have equal RGB components of the pixel. This means for the cases where the object becomes chromatic, then the RGB values should start diverging from each other. There are multiple ways for calculating the probability of the achromaticity of the pixel. For a given pixel, with r, g and b values for red, green and blue channels, examples for calculating such probability can be:

  a.

$$P_{chromaticity} = \left. \min\left(r, g, b\right) \middle/ \max\left(r, g, b\right) \right.$$

b.

$$P_{chromaticity} = \left((r - y) + (b - y) + (g - y)\right)/3k,$$

where

$y = mean(r, g, b)$ and $k = 4(2^b - 1)/9$ where $b$ is the bit-depth of the pixel data.

3. *Calculate RGB_Means:* For both inactive and active camera AWB statistics, by using the probabilities as weights, a weighted averaging is calculated to determine the RGB-means for the transformed statistics. The number of achromatic pixels in the scene is used to calculate the weight between RGB-means from achromatic pixels and RGB-means of all the pixels. In practice this means that in case of no achromatic pixels in the statistics, only RGB-means from all the pixels are used to calculate the output.

4. *Correct Inactive INB Gains by Matching RGB-Means:* Using the discrepancy between the RGB-Means calculated in the previous step, the WB gains for the inactive camera are corrected.

5. *Fallback Option: Estimate Inactive INB Gains Using Colorspace Transform Matrix (CTM):* In case the AWB statistics are invalid due to over/under exposure, a precalculated CTM is used to calculate the inactive camera WB gains from the active camera WB gains. CTM is a transformation based on the camera spectral responses. The CTM cannot map the color spaces to the satisfactory degree and for that reason, it is used only as a fallback option.

6. *Combine Steps 4 & 5:* Depending on the validity of the AWB statistics, the weighted average of the steps 4 and 5 are used as WB gains for the inactive camera. The target of the multi-camera device is to ensure smooth transition to AWB calculated WB gains. It means multi-camera WB gains will gradually get less weight and AWB calculated will get more until a point where multi-camera is not having any impact on WB gains. The weight, *w,* as show in the figure could be calculated based on the average achromaticity probability over the entire statistics grid together with the percentage of the saturated (under and over exposed) pixels.

7. *CCM Alignment:* In the points 1-6 above, it is discussed how WB gains are aligned between the active and inactive cameras. This will ensure achromatic objects are looking perceptually same after applying the synchronized WB gains. In order to transform sensor RGB colors to device independent color space (e.g. sRGB, DCI-P3, BT.2020, Rec 709, etc.) ISP pipeline applies per pixel processing color correction. Generally, this is applied using individual calibrated color correction matrices, CCMs, (3x3, LUT of 3x3 color matrices, etc.). These individual CCMs can be calibrated differently between cameras, e.g. saturation, memory colors, skin colors preferences may vary and thus possibly they would lead to visible color differences in particular for chromatic objects at the time of camera switch even when the WB gains are perfectly aligned.

The *CCM Determine* component (Nr. 7 in Figure 4) uses the pre-calculated inter-camera calibration Transformation Matrix (TM) in addition to the individual CCMs for active and inactive cameras for color correction of chromatic objects. These transformation matrices (TM) can be calculated by an offline tuning and calibration tool and as function of, but not limited to CCT, WB gains, lux level, ambient illuminant SPD. The idea of the calibration is to provide a precalculated transformation matrix that can be applied on top of the active camera individual CCM to make the inactive camera device independent colors after color correction look similar as with active camera. Therefore, the CCM alignment follows the steps below:

a. Select the correct transformation matrix (TM) based on additional information available run time (e.g. CCT, WB gains, lux level, ambient illuminant SPD);

b. Apply transformation matrix (TM) to active camera CCM (3x3, LUT of 3x3 color matrices, etc.)

$$CCM_{inactive\ camera\ transformed} = CCM_{active\ camera} \times TM$$

to obtain a transformed CCM $CCM_{inactive\ camera\ transformed}$.

c. Interpolate for the final inactive camera to obtain a synchronized CCM by

$$CCM_{synchronized} = t * CCM_{inactive\ camera} + (1 - t) * CCM_{inactive\ camera\ transformed},$$

where $t \in [0,1]$ defines a transition region between inactive camera individual CCM $CCM_{inactive\ camera}$ and transformed CCM of the inactive camera.

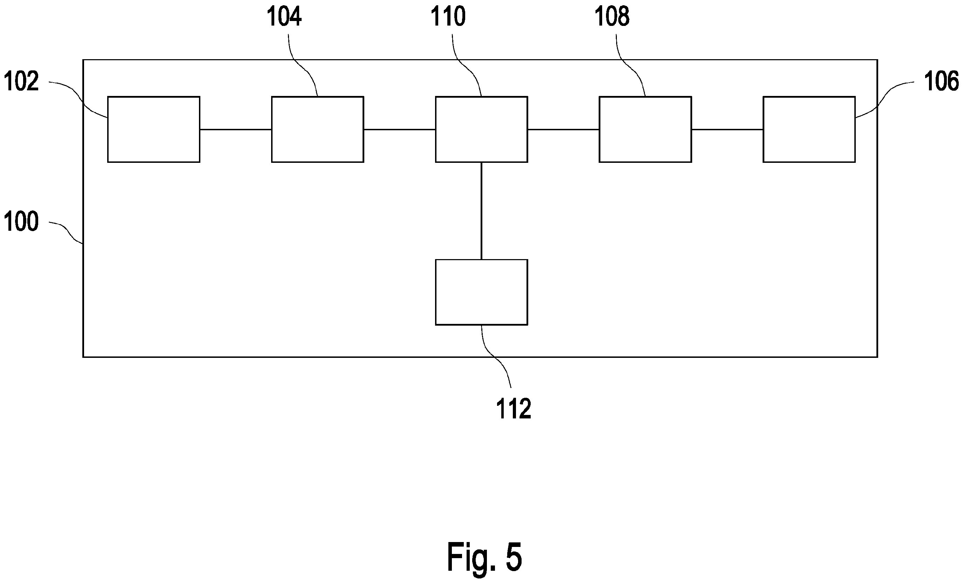

Referring to Figure 5 showing a device according to the present invention. The device 100 may be a terminal device, an IOT device or the like. The present invention is not limited to the specific implementing device. The device 100 comprises a first camera 102 connected by an ISP 104 implementing the ISP pipeline. The ISP is 104 is connected to a processor 110. The device 100 further comprises a second camera 106 adapted to a second ISP 108 implementing the ISP pipeline for the second camera 106. The second ISP 108 is also connected to the processor 110. A storage device 112 is also connected to the processor 110, wherein the storage device 112 stores instructions in order to synchronize the first camera 102 and the second camera 106. In particular, by the software stored in the storage device 112 and the processor 110 the multi-camera synchronizer as described with respect to Figure 3 is implemented. Further, software/firmware components of the device may be implemented by the processor 110 and the storage device 112.

Thus, by the present invention a real-time and efficient method is provided to maintain seamless transition between cameras of a multi-camera device. Therein, the color representation of the cameras is synchronized such that synchronization covers both comatic and achromatic objects in the scene. Therein, the present method relies on the AWB statistics representing a low-resolution representation of the image data. Therefore, the method according to the present invention does not require high resolution data reducing the computational efforts needed to perform the method and allowing real-time implementation. Further, the present method can be implemented in software or firmware, dedicated digital signal processors or hardware. Of course, the present method is not limited to multi-camera devices with two cameras and may also cover synchronization of more than two cameras. Therein, the two or more cameras may not necessarily need to have overlapping field of views contrary to the example of Figure 1. Thus, a world camera and a face camera of a multi camera device facing in opposite directions can also be used as first camera and second camera and can be synchronized. In addition, no limitations are imposed on the sensors of the first camera and the second camera. Thus, different sensors with different sensor characteristics or tunings can be used which can be synchronized with each other.

**Claims**

1. Method for synchronization of a multi-camera device having a first camera providing first image data and a second camera providing second image data, including:

   Determine achromaticity of the first image data and the second image data;
   Calculate RGB-means for the first image data and the second image data as weighted average of the RGB-values of the first image data and second image data on the basis of achromaticity;
   Adapting a white balance, WB, gain of the second camera according to the difference between the RGB-means of the first image data and the RGB-means of the second image data.

2. Method according to claim 1, wherein the achromaticity is determined from an auto white balance, AWB, statistics of the first image data and/or the second image data.

3. Method according to claim 2, wherein AWB information for the first camera and the second camera are determined and the AWB statistics of the first image data and/or the second image data is corrected on the basis of the AWB information.

4. Method according to claims 2 or 3, wherein the AWB statistics is a low resolution representation of the first image data and the second image data, respectively.

5. Method according to any of claims 2 to 4, wherein the AWB statistics of the first image data and/or the second image data is color corrected before determining achromaticity.

6. Method according to any of claims 1 to 5, wherein determining achromaticity includes: determining the probability for each pixel of the first image data and/or the second image data to pertain to an achromatic object in the first image data or the second image data, respectively.

7. Method according to any of claims 1 to 6, wherein the RGB-means for the first image data is calculated by a weighted average of the RGB values of the first image data, weighted by the achromaticity of the first image data and/or wherein the RGB-means for the second image data is calculated by a weighted average of the RGB values of the second image data, weighted by the achromaticity of the second image data.

8. Method according to any of claims 1 to 7, wherein an estimated WB gain for the second camera is determined by a predetermined Colorspace Transform Matrix, CTM, from the WB gain determined for the first camera, wherein the adapted WB gain of the second camera is interpolated between the estimated WB gain and the WB gain determined by the difference between the RGB-means of the first image data and the RGB-means of the second image data.

9. Method according to any of claims 1 to 8, wherein an individual Color Correction Matrix, CCM, is determined for the first camera from the first image data, wherein a predetermined Transformation Matrix, TM, is applied to the individual CCM of the first camera to determine a transformed CCM, wherein the second image data of the second camera is color corrected on the basis of the transformed CCM.

10. Method according to claim 9, wherein a synchronized CCM is applied to the second camera, wherein the synchronized CCM is interpolated between a predetermined individual CCM of the second camera and the transformed CCM.

11. Method according to any of claims 1 to 10, wherein the first camera and the second camera have an at least partially overlapping field of view, FOV.

12. Method according to any of claims 1 to 11, wherein for an $N^{th}$ frame the first camera is an active camera and the second camera is an inactive camera, wherein for the $(N+1)^{th}$ frame, the first camera is the inactive camera and the second camera is the active camera, wherein the adapted WB gain and/or the transformed/synchronized CCM of the second camera is applied to the $(N+1)^{th}$ frame.

13. Device comprising a first camera and a second camera, a processor and a storage device, wherein the storage device stores instructions which, when executed by the processor, perform the steps of the method according to any of claims 1 to 12.

14. Device according to claim 13 comprising an image signal processor, wherein one or more of determining the AWB statistics, applying the WB gains and applying the CCMs is performed by the ISP.

15. Computer storage device storing instructions which when executed by a processor perform the steps of the method according to any of claims 1 to 12.

Fig. 1

```
                                                              ┌──── S01
┌────────────────────────────────────────────┐
│                                              │
│   Determine achromaticity of the first image data and the   │
│                  second image data                          │
│                                              │
└────────────────────────────────────────────┘
                      │
                      ▼
                                                              ┌──── S02
┌────────────────────────────────────────────┐
│                                              │
│   Calculate RGB-means for the first image data and the      │
│   second image data as weighted average of the RGB-values   │
│   of the first image data and second image data on the basis│
│                  of achromaticity                           │
│                                              │
└────────────────────────────────────────────┘
                      │
                      ▼
                                                              ┌──── S03
┌────────────────────────────────────────────┐
│                                              │
│   Adapting a white balance, WB, gain of the second camera   │
│   according to the difference between the RGB-means of the first│
│   image data and the RGB-means of the second image data     │
│                                              │
└────────────────────────────────────────────┘
```

Fig. 2

EP 4 622 285 A1

Fig. 3

EP 4 622 285 A1

Fig. 4

Fig. 5

| | Europäisches Patentamt European Patent Office Office européen des brevets | **EUROPEAN SEARCH REPORT** | Application Number EP 24 16 4132 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 656 121 B1 (SAMSUNG ELECTRONICS CO LTD [KR]) 22 March 2023 (2023-03-22)<br>* paragraph [0060] - paragraph [0098]; figures 1C, 2, 4A, 4B, 4C, 5A * | 1-7, 11-15<br>8-10 | INV.<br>H04N23/88<br>H04N23/45<br>H04N23/667<br>H04N23/90 |
| Y<br>A | US 2020/145633 A1 (YUAN QUAN [CN]) 7 May 2020 (2020-05-07)<br>* paragraph [0040] - paragraph [0123]; figures 1-5 * | 1-7, 11-15<br>8-10 | |
| Y | CN 112 954 290 A (CHONGQING XINQICHENG ARTIFICIAL INTELLIGENCE CHIP TECH CO LTD) 11 June 2021 (2021-06-11)<br>* Section "Detailed Ways"; figures 1-4 * | 1-7, 11-15 | |
| Y | CN 116 095 292 A (BRIGATES MICROELECTRONICS CO LTD) 9 May 2023 (2023-05-09)<br>* Section "Detailed Ways"; figures 1-7 * | 1-7, 11-15 | TECHNICAL FIELDS SEARCHED (IPC)<br><br>H04N |

The present search report has been drawn up for all claims

| Place of search | Date of completion of the search | Examiner |
|---|---|---|
| Munich | 22 July 2024 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4132

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | | Publication date | Patent family member(s) | | Publication date |
|---|---|---|---|---|---|
| EP 3656121 | B1 | 22-03-2023 | EP | 3656121 A1 | 27-05-2020 |
| | | | JP | 2019110361 A | 04-07-2019 |
| | | | KR | 20190072402 A | 25-06-2019 |
| US 2020145633 | A1 | 07-05-2020 | CN | 107277480 A | 20-10-2017 |
| | | | EP | 3641307 A1 | 22-04-2020 |
| | | | EP | 4037313 A1 | 03-08-2022 |
| | | | US | 2020145633 A1 | 07-05-2020 |
| | | | WO | 2019011090 A1 | 17-01-2019 |
| CN 112954290 | A | 11-06-2021 | NONE | | |
| CN 116095292 | A | 09-05-2023 | NONE | | |

EPO FORM P0459

For more details about this annex : see Official Journal of the European Patent Office, No. 12/82